# EUROPEAN PATENT APPLICATION

(11) **EP 4 582 940 A1**
(43) Date of publication of application: **09.07.2025**
(21) Application number: 24812685.6
(22) Date of filing: 21.10.2024
(51) Int. Cl.: G06F 9/448, G06F 3/0481, G06F 3/0482, G06F 3/0484, G06F 9/00, G06F 9/06, G06F 9/445, G06F 9/48

(54) **USER DEVICE AND APPLICATION EXECUTION METHOD USING SAME**

(30) Priority: 20.11.2023 KR 20230160349; 26.12.2023 KR 20230190942
(71) Applicant: SAMSUNG ELECTRONICS CO., LTD., Yeongtong-gu Suwon-si, Gyeonggi-do 16677 (KR)
(72) Inventor: SONG, Gyeongshin, Suwon-si Gyeonggi-do 16677 (KR); SON, Hongjung, Suwon-si Gyeonggi-do 16677 (KR); LEE, Jaebeom, Suwon-si Gyeonggi-do 16677 (KR)
(74) Representative: HGF
(86) International application number: PCT/KR2024/015995
(87) International publication number: WO 2025/110490

(57) **Abstract**

According to various embodiments, the electronic device may include a memory that store instructions and a processor, and when the instructions are executed by the processor, the electronic device may be configured to identify the execution of the second application corresponding to the component of the first application in response to the execution of the first application from among a plurality of applications stored in the memory, store chain information indicating an associative relationship between the first application and the second application in the memory, and execute the second application corresponding to the component of the first application based on the chain information stored in the memory in response to the execution of the first application while the chain information between the plurality of applications is stored in the memory. Various other embodiments may be possible.

## Description

### [Technical Field]

An embodiment of the disclosure relates to an electronic device and a method for executing an application using the same.

### [Background Art]

With the recent development of digital technology, various types of electronic devices (user devices) (e.g., mobile communication terminals, personal digital assistants (PDAs), electronic notebooks, smartphones, tablets, and personal computers (PCs), etc.) capable of communicating and processing personal information have been released. Electronic devices are reaching a stage of mobile convergence that does not remain within their own traditional domains but also encompasses the domains of other electronic devices. For example, electronic devices may perform various functions such as call functions such as voice and video calls, message transmission and reception functions such as short message service (SMS)/multimedia message service (MMS) and email (e-mail), navigation functions, shooting functions, broadcast playback functions, media (video and music) playback functions, Internet functions, messenger functions, social networking service (SNS) functions and the like.

The above-described information may be provided as a related art for the purpose of helping understanding of the disclosure. No claim or determination is made as to whether any of the foregoing may be applied as a prior art related to the disclosure.

### [Disclosure of Invention]

### [Technical Problem]

In an electronic device, a plurality of programs (e.g., application programs) may be stored or installed in a memory. The electronic device may execute each of the plurality of programs individually or execute a second program in connection with the execution of a first program. The electronic device may execute a specific program in a foreground or in a background. In a state where the plurality of programs are running together, the electronic device may stop a program running in the background (e.g., a kill operation) to improve the performance of the electronic device. In response to the execution of the specific program, the electronic device may maintain or stop the operation of another program running in the background, and as the other programs are repeatedly or non-repeatedly re-executed, the performance of the electronic device may be at least partially degraded.

According to an embodiment, the electronic device may identify an associative relationship between the execution of each of a plurality of programs and manage the operation of each program. For example, the processor of the electronic device may identify a second application linked to a first application in a situation where the first application is running, and determine whether to execute the second application while maintaining execution of the first application. For example, while the first application is running, the electronic device may manage the second application that is essentially running in the background state and a third application that is unnecessarily running in the background state.

According to an embodiment, when the first application is running in the foreground, the electronic device may control the operation of another application that is unnecessarily running in the background (e.g., an application that has little relevance to the execution of the first application). According to an embodiment, the disclosure is to improve the performance of an electronic device while a specific application is running.

The technical challenges intended to be achieved in the disclosure are not limited to the technical challenges mentioned above, and other technical challenges not mentioned may be clearly understood by those skilled in the art belonging to the disclosure from the description below.

### [Solution to Problem]

According to an embodiment, the electronic device may include a memory that store instructions and a processor, wherein the instructions are configured to, when executed by the processor, identify execution of the second application corresponding to the component of the first application in response to the execution of the first application from among a plurality of applications stored in the memory, store chain information indicating an associative relationship between the first application and the second application in the memory, and execute the second application corresponding to the component of the first application based on the chain information stored in the memory in response to the execution of the first application while the chain information between the plurality of applications is stored in the memory.

According to an embodiment, a method of executing an application performed by an electronic device may include identifying the execution of a second application corresponding to a component of a first application in response to the execution of the first application from among a plurality of applications stored in a memory, storing chain information indicating an associative relationship between the first application and the second application in the memory, and executing the second application corresponding to the component of the first application based on the chain information stored in the memory in response to the execution of the first application in a state in which chain information between the plurality of applications is stored in the memory.

According to an embodiment, a non-transitory computer-readable storage medium (or a computer program product) storing one or more programs for performing an application execution method of an electronic device may be described. According to an embodiment, the one or more programs may include instructions, when executed by the processor of the electronic device, to perform: identifying the execution of a second application corresponding to a component of the first application in response to the execution of the first application from among a plurality of applications stored in a memory; storing chain information indicating an associative relationship between the first application and the second application in the memory; and executing the second application corresponding to the component of the first application based on the chain information stored in the memory in response to the execution of the first application in a state in which chain information between the plurality of applications is stored in the memory.

### [Advantageous Effects of Invention]

According to an embodiment, an electronic device may identify an associative relationship (e.g., chain information) for each of a plurality of applications, and control an operation of each application based on the identified associative relationship. For example, in response to the execution of a first application, the electronic device may automatically execute a second application that is highly related to the first application (e.g., chain information is configured). In response to the execution of the first application, the electronic device may identify a third application that has a low correlation with the first application (e.g., chain information is not configured), and stop (e.g., a kill operation) execution of the identified third application. The electronic device may improve its performance by controlling the operation of at least one application based on the associative relationship between applications. The utilization of the memory of the electronic device may be improved. The efficiency of the battery of the electronic device may be improved.

The effects that may be obtained from the disclosure are not limited to the effects mentioned above, and other effects not mentioned may be clearly understood by those skilled in the art belonging to the disclosure from the description below.

### [Brief Description of Drawings]

In relation to the description of the drawings, identical or similar reference numerals may be used for identical or similar components.
FIG. 1 is a block diagram of an electronic device in a network environment according to an embodiment of the disclosure.
FIG. 2 is a block diagram illustrating a program according to an embodiment of the disclosure.
FIG. 3 is a diagram illustrating an embodiment in which a second application related to a first application is executed when the first application is executed according to an embodiment of the disclosure.
FIG. 4 is a block diagram of an electronic device according to an embodiment of the disclosure.
FIG. 5 is a flowchart illustrating a method for generating chain information between a plurality of applications according to an embodiment of the disclosure.
FIG. 6 is a flowchart illustrating a method of executing an application based on chain information according to an embodiment of the disclosure.
FIG. 7 is a flowchart illustrating a method of controlling an application based on chain information according to an embodiment of the disclosure.

### [Mode for the Invention]

Hereinafter, embodiments of the present disclosure will be described in detail with reference to the drawings so that those with ordinary skill in the art to which the present disclosure pertains may easily carry out the embodiments. However, the present disclosure may be implemented in various different ways and is not limited to the embodiments described herein. In connection with the description of the drawings, the identical or similar reference numerals may be used for the identical or similar components. In addition, in the drawings and related description, descriptions of well-known functions and constitution may be omitted for clarity and brevity.

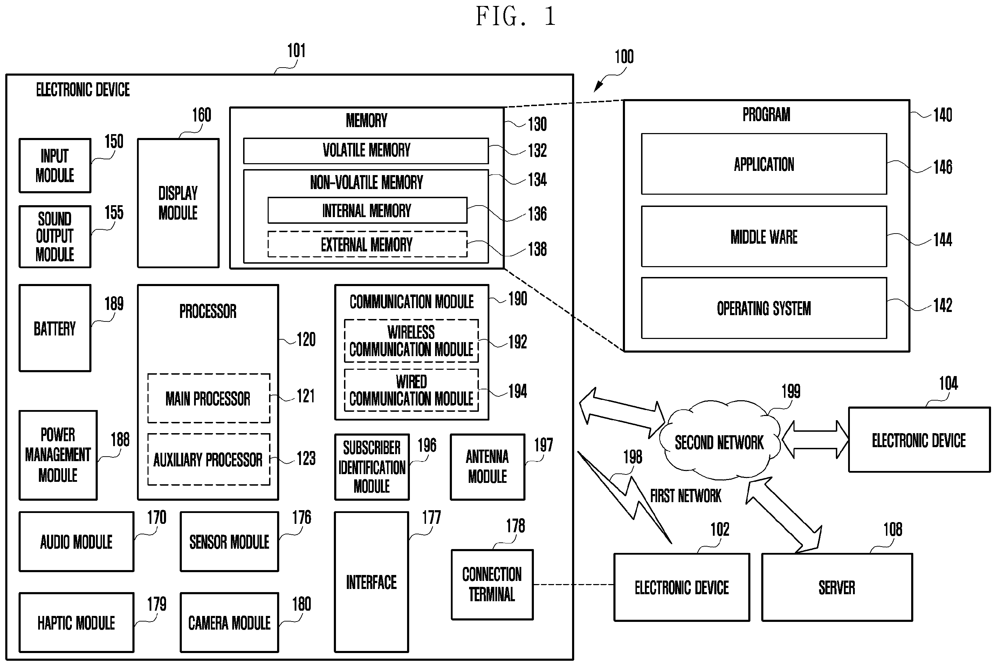

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include a patch array antenna and/or a dipole array antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

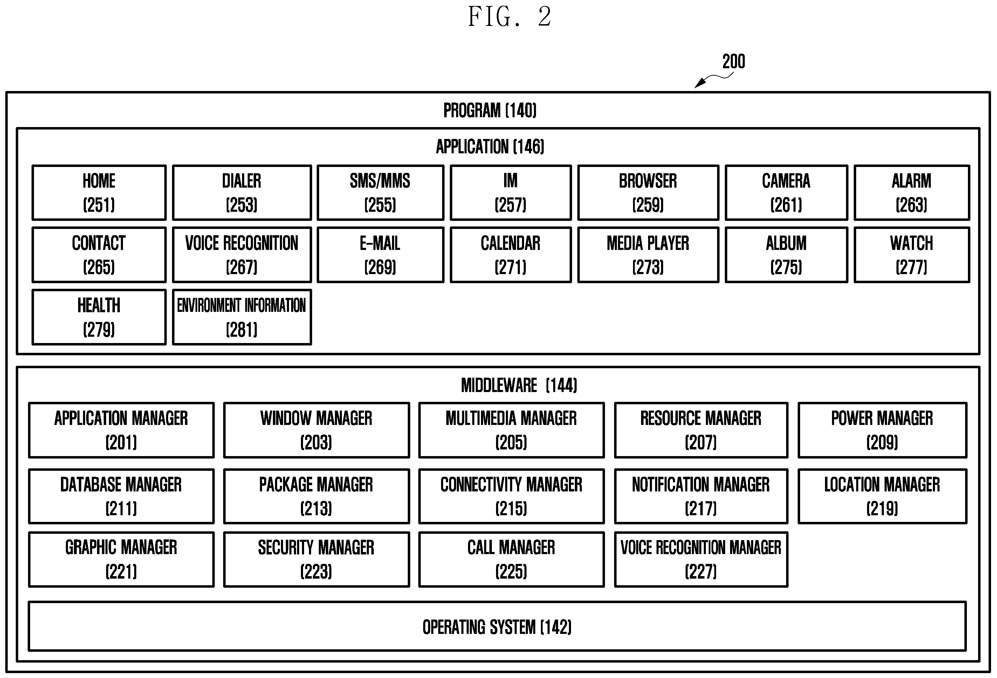

Fig. 2 is a block diagram 200 illustrating the program 140 according to various embodiments.

The program 140 of FIG.2 may be at least partially similar to the program 140 of FIG. 1 or may further include other embodiments of the program 140. The program 140 may include a program stored in a memory (e.g., the memory 130 of FIG. 1) of an electronic device (e.g., the electronic device 101 of FIG. 1).

According to an embodiment, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input device 150, the sound output device 155, the display device 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application.

According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device.

The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101. The device management application may control the power (e.g., turn-on or turn-off) or the function (e.g., adjustment of brightness, resolution, or focus) of the external electronic device or some component thereof (e.g., a display device or a camera module of the external electronic device). The device management application, additionally or alternatively, may support installation, delete, or update of an application running on the external electronic device.

According to an embodiment, the program 140 may include a program configuring the home screen of the electronic device 101. For example, the package manager 213 included in the middleware 144 may manage a package file (e.g., a home screen package file) generated based on data and attribute information related to the configuration of the home screen. According to an embodiment, the electronic device 101 may generate a home screen based on a package file related to the configuration of the home screen, and display the generated home screen through a display (e.g., the display module 160 of FIG. 1). According to an embodiment, when the initialized electronic device 101 performs an initial configuration function (e.g., a configuration function for operation of the electronic device 101 when booting the electronic device 101), the electronic device 101 may implement a home screen based on a package file.

According to an embodiment, in relation to the execution of the application 146, the program 140 may include a component recognition program to identify based on which component the application 146 is executed. For example, a component may be classification information representing the related operation of the application 146 when the application 146 is executed, and may include components corresponding to a plurality of types, such as "activity", "service", "provider", and "broadcast". For example, in the Android^{™} OS, component types may include "activity", "service", "broadcast receiver" and "content provider", but the present application is not limited thereto. According to an embodiment, a component may be configured in advance by a developer, and in response to the execution of the application 146, one component may be determined from among a plurality of components.

According to an embodiment, when a specific application is executed, the electronic device 101 may determine based on which component the specific application is executed. For example, when executing a specific application, if the execution screen of the specific application is displayed through a display (e.g., the display module 160 of FIG. 1), the component of the specific application may be determined to be a specific type of "activity". The electronic device 101 may identify that a specific application is executed based on the component "activity."

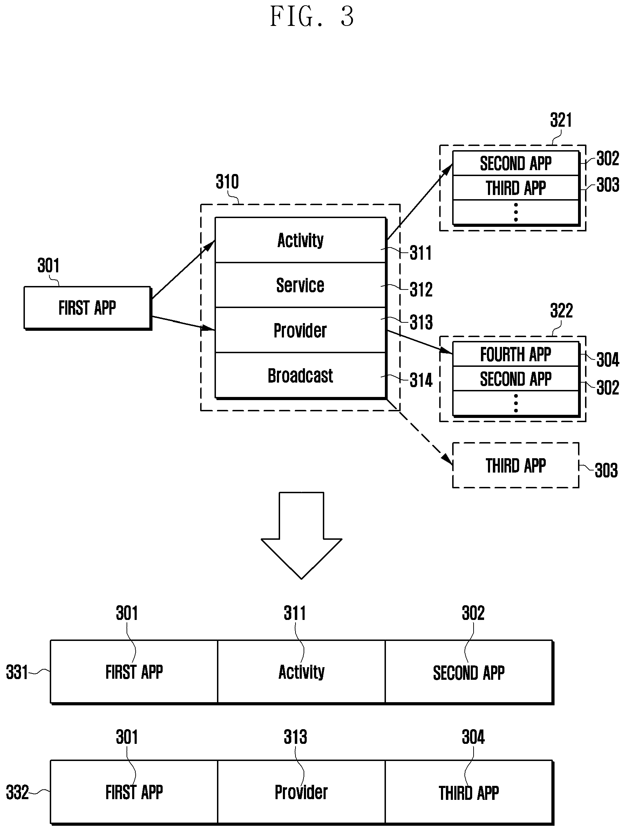

FIG. 3 is a diagram illustrating an embodiment in which a second application related to a first application is executed when the first application is executed according to an embodiment of the disclosure.

The electronic device of FIG. 3 may be at least partially similar to the electronic device 101 of FIG. 1 or may further include other embodiments of the electronic device 101. The operation illustrated in FIG. 3 may be performed by the electronic device 101.

Referring to FIG. 3, when a first application 301 (e.g., a first APP, the application 146 of FIGS. 1 and 2) is executed, the electronic device 101 may identify a component 310 related to execution of the first application 301. For example, the component 310 may be classification information indicating a related operation of the first application 301 and may include a plurality of preconfigured components.

The component 310 in FIG. 3 may include several types of components, such as "activity" 311, "service" 312, "provider" 313, and/or "broadcast" 314. For example, when the first application 301 is executed, if the execution screen of the first application 301 is displayed through a display (e.g., the display module 160 of FIG. 1), the component of the first application 301 may be determined to be a first type of "activity" 311. When the first application 301 is executed, if the first application 301 operates in a background state or in a foreground state, the component of the first application 301 may be determined to be a second type of "service" 312. For example, when a music playback application executed in the background state, the component of the music playback application may be determined to be a second type of "service" 312. When the first application 301 is executed, if data is loaded based on the first application 301, the component of the first application 301 may be determined to be a third type of "provider" 313. For example, when account information is retrieved in response to a log-in operation according to the execution of a social application, the component of the social application may be determined to be a third type of "provider" 313. When the first application 301 is executed, if a specific operation configured based on the first application 301 is performed, the component of the first application 301 may be determined to be a fourth type of "broadcast" 314. The component types may be, or may be similar to, the application components used in the Android^{™} OS, such as "activity", "service", "broadcast receiver", and "content provider". For example, an "activity" may be for interacting with the user, and may involve displaying an execution screen of the application with a user interface. For example, a "service" may be for running the application in the background. For example, a "broadcast receiver" may be for allowing the application to receive events from the system or other applications. For example, a "content provider" may be for managing data, and the managed data may be accessible to other applications. It will be appreciated that the described component types are merely examples, and the present disclosure is not limited to these component types.

According to an embodiment, when a specific application is executed in the electronic device 101, a specific operation (e.g., execution of another application) may be performed based on at least one component from among a plurality of components. For example, when a specific application is executed, at least one or more components may be determined substantially simultaneously, and a specific operation configured to correspond to each component may be performed.

Referring to FIG. 3, when the first application 301 is executed, the electronic device 101 may execute a second application (e.g., a second APP 302) corresponding to a first type of component (e.g., "activity" 311) of the first application 301. For example, the electronic device 101 may select the second application 302 with a relatively high execution probability from among a plurality of applications (e.g., the second APP 302 and the third APP 303). For example, in a situation where the first application 301 is executed as a first type of component (e.g., "activity" 311), a first list 321 may be implemented based on the execution history (e.g., execution history information) of the application executed in connection. In response to the first application 301 being executed as a first type of component (e.g., "activity" 311), the electronic device 101 may select the second application 302 with a relatively high execution probability (e.g., the highest execution probability) from among the applications included in the first list 321. According to an embodiment, the electronic device 101 may generate first chain information 331 indicating the associative relationship between the first type of component (e.g., "activity" 311) of the first application 301 and the second application 302. The electronic device 101 may store the generated first chain information 331 in a memory (e.g., the memory 130 of FIG. 1).

Referring to FIG. 3, when the first application 301 is executed, the electronic device 101 may execute a fourth application (e.g., a fourth APP 304) corresponding to a third type of component (e.g., "provider" 313) of the first application 301. For example, the electronic device 101 may select the fourth application 304 with a relatively high execution probability (e.g., the highest execution probability) from among a plurality of applications (e.g., the fourth APP 304 and the second APP 302). For example, in a situation where the first application 301 is executed as a third type of component (e.g., "provider" 313), a second list 322 may be implemented based on the execution history (e.g., execution history information) of the application executed in connection. In response to the first application 301 being executed as a third type of component (e.g., "provider" 313), the electronic device 101 may select the fourth application 304 with a relatively high execution probability from among the applications included in the second list 322. According to an embodiment, the electronic device 101 may generate second chain information 332 indicating the associative relationship between the third type of component (e.g., "provider" 313) of the first application 301 and the fourth application 304. The electronic device 101 may store the generated second chain information 332 in the memory 130.

Referring to FIG. 3, when the first application 301 is executed, if it is determined to be a fourth component (e.g., "broadcast" 314) of the first application 301, the electronic device 101 may execute a third application (e.g., the third APP 303) linked to the fourth component (e.g., "broadcast" 314).

According to an embodiment, the chain information 331 and 332 may indicate an associative relationship between a plurality of applications. For example, chain information 331 and 332 may include a relatively important application in a situation where a specific application is executed. Referring to the first chain information 331, the second application 302 may be executed in response to the first application 301 being executed as a first type of component (e.g., "activity" 311). For example, in the situation where the first application 301 is executed as a first type component (e.g., "activity" 311), the second application 302 may be determined to be an application of relatively high importance (e.g., an application with a relatively high or highest execution probability) with regard to the first type of component. Referring to the second chain information 332, the fourth application 304 may be executed in response to the first application 301 being executed as a third type of component (e.g., "provider" 313). For example, in the situation where the first application 301 is executed as a third type of component (e.g., "provider" 313), the fourth application 304 may be determined to be an application of relatively high importance with regard to the third type of component. According to an embodiment, the electronic device 101 may store the chain information 331 and 332 in the memory 130, add other chain information, or delete existing stored chain information. The electronic device 101 may update the chain information 331 and 332 stored in the memory 130.

According to an embodiment, the electronic device 101 may identify at least one component 310 corresponding to the first application 301 in response to a situation where the first application 301 is executed, and execute the second application 302 corresponding to another application (e.g., a first type of component (e.g., "activity" 311) configured to correspond to each component and the fourth application 304 corresponding to a third type of component (e.g., "provider" 313). According to an embodiment, the electronic device 101 may identify at least one type of component 310 corresponding to the execution of the first application 301 in response to a situation where the first application 301 is executed, and may execute at least one application corresponding to each type of component 310. For example, if a first component type and a second component type are identified when the first application 301 is executed, a second application corresponding to the first component type, and a third application corresponding to the second component type may be executed.

According to an embodiment, the electronic device 101 may execute the second application 302 in response to the first application 301 being executed as a first type component (e.g., "activity" 311). **In** this case, if the execution state of the first application 301 is continuously maintained, the execution state of the second application 302 may also be maintained the same. **In** a situation where the first application 301 is executed, the second application 302 may be an application of relatively high importance and may maintain the execution state. According to an embodiment, in a situation where the first application 301 is executed as a first type of component (e.g., "activity" 311), the electronic device 101 may at least partially stop (e.g., kill) the execution of another application being executed in a background state. **In** this situation, in order to maintain the execution state of the first application 301, the electronic device 101 may maintain the execution state of the second application 302 with a relatively high importance.

According to an embodiment, in response to the execution of the first application 301, the electronic device 101 may automatically execute the second application 302 corresponding to a first type of component (e.g., "activity" 311) of the first application 301 based on the first chain information 331 stored in the memory 130. According to an embodiment, in response to the execution of the first application 301, the electronic device 101 may automatically execute the fourth application 304 corresponding to a third type of component (e.g., "provider" 313) of the first application 301 based on the second chain information 332 stored in the memory 130. According to an embodiment, in response to the execution of the first application 301, the electronic device 101 may identify another application configured based on at least one component and execute the identified application.

According to an embodiment, the electronic device 101 may improve the performance of the electronic device by controlling the operation of at least one application based on the associative relationship between applications (e.g., chain information, importance information). For example, in a situation where the first application 301 is executed, the electronic device 101 may maintain the execution of an application configured with a relatively high importance, and may stop (e.g., a kill operation) execution of an application configured with a relatively low importance. According to an embodiment, utilization of the memory 130 of the electronic device 101 may be improved. According to an embodiment, efficiency of the battery (e.g., the battery 189 of FIG. 1) of the electronic device 101 may be improved.

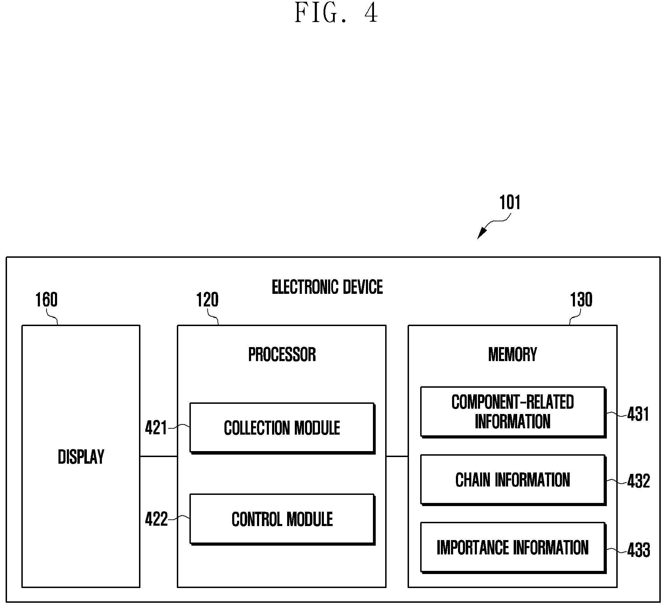

FIG. 4 is a block diagram of an electronic device according to an embodiment of the disclosure.

The electronic device of FIG. 4 may be at least partially similar to the electronic device 101 of FIG. 1 or may further include other embodiments of the electronic device 101.

Referring to FIG. 4, the electronic device 101 may include a processor (e.g., the processor 120 of FIG. 1), a memory (e.g., the memory 130 of FIG. 1), and/or a display (e.g., the display 160 of FIG. 1). The processor 120 may include a collection module 421 that collects data and information and a control module 422 that controls at least one component. According to an embodiment, the operations performed by the collection module 421 and the control module 422 may also be understood as being performed by the processor 120.

According to an embodiment, the processor 120 of the electronic device 101 may execute a program (e.g., the program 140 of FIGS. 1 and 2) stored in the memory 130 to control at least one other component (e.g., a hardware or software component) and perform various data processing or calculations. The processor 120 may include the collection module 421 and the control module 422. For example, the collection module 421 may collect data and information and store the same in the memory 130, and the control module 422 may control the operation of at least one other component. According to an embodiment, the processor 120 may be operatively, functionally, and/or electrically connected to the memory 130 and/or the display 160.

According to an embodiment, the collection module 421 may collect at least one application component (e.g., the component 310 of FIG. 3) determined when an application is executed. For example, at least one component 310 may include "activity" (e.g., the "activity" 311 of FIG. 3), "service" (e.g., the "service" 312 of FIG. 3), "provider" (e.g., the "provider" 313 of FIG. 3), and/or "broadcast" (e.g., the "broadcast" 314 of FIG. 3). When a specific application is executed, the collection module 421 may obtain component-related information to determine whether the specific application is executed based on which component. For example, the component type may be defined in the code of the application (e.g. as a class) or may be determined by the electronic device 101 based on the type of operation that is performed. In response to the first application being executed as a first type of component, the collection module 421 may collect chain information related to the execution of the second application when the second application configured to correspond to the first type component is executed. According to an embodiment, the collection module 421 may collect chain information generated based on a plurality of applications, and store the collected chain information in the chain information 432 of the memory 130.

According to an embodiment, the control module 422 may at least partially control an operation of at least one application based on the chain information 432 stored in the memory 130. For example, when the first application is executed as a first type of component, the control module 422 may identify the second application corresponding to the first type of component based on the chain information 432, and automatically execute the identified second application. According to an embodiment, the control module 422 may execute the second application operatively connected to the first application (e.g., highly related to the first application, for example based on chain information or execution history information) in a background based on the first application being executed in a foreground. According to an embodiment, the control module 422 may stop (e.g., kill operation) the execution of the third application that is not operatively connected to the first application in the background (e.g., less relevant to the first application) based on the first application being executed in the foreground.

According to an embodiment, the collection module 421 and the control module 422 may be included in an application framework (e.g., a software framework, an Android framework). For example, the collection module 421 and the control module 422 may configure or control various operations related to the application. The collection module 421 and the control module 422 may at least partially control at least one application based on the Android framework.

According to an embodiment, when a specific application is executed, the memory 130 may include component-related information 431 for storing component information determined based on the operation of the specific application. For example, the component-related information 431 may include a first type of "activity" (e.g., the "activity" 311 of FIG. 3), a second type of "service" (e.g., the "service" 312 of FIG. 3), a third type of "provider" (e.g., the "provider" 313 of FIG. 3), and/or a fourth type of "broadcast" (e.g., the "broadcast" 314 of FIG. 3). According to an embodiment, when the first application is executed, at least one component corresponding to the first application may be determined based on the component-related information 431. The component-related information 431 may include several types of components.

According to an embodiment, the memory 130 may include chain information 432 indicating an associative relationship between a plurality of applications. For example, in response to the first application being executed as a first type of component (e.g., "activity" 311), the processor 120 may identify the second application having an association with the first type of component according to the execution of the first application based on the chain information 432. According to an embodiment, the electronic device 101 may store the chain information 432 in the memory 130, add other chain information, or delete existing stored chain information. The electronic device 101 may update the chain information 432 stored in the memory 130.

According to an embodiment, when there are a plurality of second applications having an associative relationship with the first application, the memory 130 may include importance information 433 indicating priority and importance between the second applications. For example, in response to the first application being executed as a first type of component (e.g., "activity" 311), the processor 120 may identify a plurality of second applications having an association with a first type of component according to the execution of the first application based on the chain information 432. The processor 120 may select one second application having a relatively high priority (e.g., a relatively high importance in maintaining execution of the first application) from among a plurality of second applications based on the importance information 433. For example, the processor 120 may select one second application having the highest priority/importance from among a plurality of second applications based on the importance information 433.

According to an embodiment, when the first application is executed, the display 160 may be a component on which an execution screen of the first application is displayed. For example, the processor 120 may display the execution screen of the first application through the display 160 in response to the execution of the first application. When the first application is executed as a first type of component (e.g., "activity" 311), the execution screen may be displayed through the display 160. For example, the first application may be running in a foreground state. The processor 120 may identify that the first application has been executed as a first type of component (e.g., "activity" 311) based on the component-related information 431 of the memory 130.

According to an embodiment, when the first application is executed as a first type of component based on the chain information 432 of the memory 130, the processor 120 may identify at least one second application linked to the first type component. The processor 120 may select a second application having a relatively high priority or a relatively high importance from among the at least one identified second application based on the importance information 433 of the memory 130. According to an embodiment, the electronic device 101 may automatically execute the selected second application in response to a situation where the first application is executed as a first type of component (e.g., "activity" 311). For example, the second application may be running in a background state.

According to an embodiment, when an execution request of the first type of component according to the first application is detected, the processor 120 may identify a top-component corresponding to an application (e.g., top-application) currently running in a foreground (e.g., top-application), and identify a correlation (e.g., the presence or absence of chain information 432) between the identified top-component and the first type of component. For example, if the first type of component is highly related to the top-component (e.g., if chain information 432 exists), the processor 120 may execute the first type of component. For another example, if the first type of component has a low correlation with the top-component (e.g., chain information 432 does not exist), the processor 120 may delay execution of the first type of component until processing of the top-application is completed. After the processing of the top-application is completed, the processor 120 may execute the first type of component.

According to an embodiment, when the first application is executed as a first type of component, the electronic device 101 may identify a third application running in a background state. For example, the processor 120 may identify a third application that is less related to the execution of the first application based on the chain information 432 of the memory 130. For example, the third application may be identified as less related if no chain information 432 exists between the first type of component (of the first application) and the third application. For example, in a situation where the first application is executed as a first type of component, the third application in the background state may include an application of relatively low importance. For example, the third application may be identified as less related if chain information 432 exists between the first type of component (of the first application) and the third application but the priority or importance of the third application is below a predetermined threshold. According to an embodiment, the electronic device 101 may stop (e.g., kill operation) the execution of the third application running in the background state in response to a situation where the first application is executed as a first type of component (e.g., "activity" 311). For example, since the third application has a low correlation with the execution of the first application as a first type of component (e.g., "activity" 311), the execution of the third application may be stopped (e.g., kill operation).

According to an embodiment, when a kill operation (e.g., terminating the execution of the application) is requested for a specific application, the electronic device 101 may identify whether the specific application is related to the top-application based on the chain information 432. For example, if the specific application is related to the top-application, the electronic device 101 may maintain the execution state of the specific application, and may skip the kill operation for the specific application or keep the kill operation pending (e.g., delay). For example, if the specific application is not related to the top-application, the electronic device 101 may stop the execution of the specific application (e.g., kill operation).

According to an embodiment, the electronic device 101 may include a memory 130 that store instructions and a processor 120. When the instructions are executed by the processor 120, the electronic device 101 may identify the execution of the second application 302 corresponding to the component 310 of the first application 301 in response to the execution of the first application 301 from among a plurality of applications stored in the memory 130. When the instructions are executed by the processor 120, the electronic device 101 may store chain information 432 indicating an associative relationship between the first application 301 and the second application 302 in the memory 130. When the instructions are executed by the processor 120, the electronic device 101 may be configured to execute the second application 302 corresponding to the component 310 of the first application 301 based on the chain information 432 stored in the memory 130 in response to the execution of the first application 301 while the chain information 432 between the plurality of applications is stored in the memory 130.

According to an embodiment, when the instructions are executed by the processor 120, the electronic device 101 may be configured to identify an execution probability of at least one application corresponding to the component 310 of the first application 301 in response to the execution of the first application 301, determine the second application 302 having a relatively high execution probability based on the identified execution probability, and generate the chain information 432 in which an associative relationship between the first application 301 and the second application 302 is configured.

According to an embodiment, the electronic device 101 may further include a display 160. According to an embodiment, when the instructions are executed by the processor 120, the electronic device 101 may be configured to display execution screen of the first application 301 through the display 160 in response to the execution of the first application 301, and execute the second application 302 in a background state.

According to an embodiment, when the instructions are executed by the processor 120, the electronic device 101 may be configured to identify a request to stop execution of a third application being executed in a background state while the execution screen of the first application 301 is being displayed through the display 160, and maintain execution of the third application when an associative relationship between the third application and the first application 301 is identified based on the chain information 432 stored in the memory 130.

According to an embodiment, when the instructions are executed by the processor 120, the electronic device 101 may be configured to identify the priority corresponding to each application when there are multiple identified second applications 302, select at least one second application 302 to be executed based on the identified priority, and execute the selected at least one second application 302.

According to an embodiment, the priority may be determined based on the importance corresponding to the at least one second application 302 in order to maintain execution of the first application 301.

According to an embodiment, when the instructions are executed by the processor 120, the electronic device 101 may be configured to identify at least one third application being executed in a background, and stop execution of the at least one third application when the identified at least one third application is not included in the at least one second application.

According to an embodiment, the component 310 may include at least one of a first type of component in which an execution screen of the first application 301 is displayed, a second type of component in which the first application 301 is executed in a background state, a third type of component in which account information connected through the first application 301 is shared, and a fourth type of component in which at least one component included in the electronic device 101 is controlled based on the first application 301.

According to an embodiment, when the instructions are executed by the processor 120, the electronic device 101 may be configured to identify at least one preparation operation performed before execution of the identified second application 302, and perform at least some of the preparation operations corresponding to the second application 302 in response to the execution of the first application 301.

According to an embodiment, when the instructions are executed by the processor 120, the electronic device 101 may be configured to identify a situation where the second application 302 is executed in response to the execution of the first application 301, identify additional chain information indicating an associative relationship between the first application 301 and the second application 302, and update chain information 432 stored in the memory 130 based on the identified additional chain information.

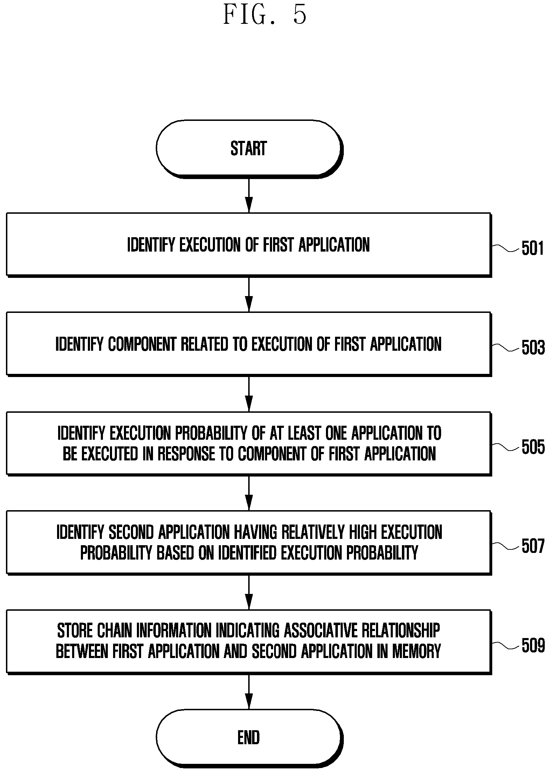

FIG. 5 is a flowchart illustrating a method for generating chain information between a plurality of applications according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 501 to 509 may be understood as being performed by a processor (e.g., the processor 120 of FIGS. 1 and 4) of an electronic device (e.g., the electronic device 101 of FIGS. 1 and 4). The electronic device 101 of FIG. 5 may be at least partially similar to the electronic device 101 of FIGS. 1 and 4, or may further include other embodiments of the electronic device 101.

According to an embodiment, the processor 120 of the electronic device 101 may identify a component (e.g., the component 310 of FIG. 3) related to the execution of the first application 301 in response to the execution of the first application (e.g., the first application 301 of FIG. 3). For example, the component 310 may include "activity" (e.g., the "activity" 311 of FIG. 3), "service" (e.g., the "service" 312 of FIG. 3), "provider" (e.g., the "provider" 313 of FIG. 3), and/or "broadcast" (e.g., the "broadcast" 314 of FIG. 3). For example, when the first application 301 is executed, if the execution screen of the first application 301 is displayed through a display (e.g., the display module 160 of FIG. 1), the component related to the execution of the first application 301 may be determined to be "activity" 311. For example, when the first application 301 is executed, if the first application 301 operates in a background state or in a foreground state, the component related to the execution of the first application 301 may be determined to be "service" 312. For example, when the first application 301 is executed, if data (e.g., account information) is loaded based on the first application 301, the component of the first application 301 may be determined to be "provider" 313. For example, when the first application 301 is executed, if a specific operation configured based on the first application 301 is performed, the component of the first application 301 may be determined to be "broadcast" 314. According to an embodiment, the processor 120 may identify a plurality of applications executed in response to the component of the first application 301. For example, the plurality of plurality of applications executed in response to the component type of the first application 301 may be identified based on chain information 432 previously stored in the memory 130. For example, the processor 120 may identify applications previously executed within a predetermined time of execution of the component type of the first application 301. For example, the processor 120 may identify the execution probability of each of the plurality of identified applications based on historical information (e.g., history information) related to the execution of applications. The processor 120 may select a second application (e.g., the second application 302 of FIG. 3) having a relatively high execution probability. According to an embodiment, the processor 120 may execute the selected second application 302 corresponding to the component of the first application 301 in response to the execution of the first application 301. According to an embodiment, the processor 120 may generate chain information (e.g., the chain information 432 of FIG. 4) indicating an associative relationship between the component of the first application 301 and the second application 302, and may store the generated chain information 432 in the memory 130.

Referring to FIG. 5, in operation 501, the processor 120 of the electronic device 101 may identify execution of the first application 301. For example, when the first application 301 is executed, at least one component may be determined in relation to the execution of the first application 301.

In operation 503, the processor 120 may identify a component related to execution of the first application 301. For example, the component 310 may include "activity" 311, "service" 312, "provider" 313, and/or "broadcast" 314. According to an embodiment, the number of components 310 is not limited to the above-described number, and other types of components may be added in relation to the operation of the application.

In operation 505, the processor 120 may identify the execution probability of at least one application to be executed in response to the component of the first application 301. For example, when a plurality of applications are related to each other corresponding to the same component, the execution probability of each application may be identified based on historical information (e.g., history information) related to the execution of each application. For example, in a situation where the first component of the first application 301 is being executed, the processor 120 may identify information related to at least one second application being executed within a configured time. For example, the plurality of applications related to the component type of the first application 301 may be determined based on chain information 432 previously stored in the memory 130. For example, when there are a plurality of second applications, the processor 120 may identify the execution probability of each of the second applications executed in connection with the first application 301 when the first application 301 is executed. For example, whenever the first application 301 is executed, if the second application is always executed (e.g. always executed within the predetermined time period), the execution probability of the second application associated with the first application 301 may be identified to be about 100%. For example, the execution probability of at least one application may indicate the importance of the at least one second application in a situation where the first application 301 is executed as a corresponding component. The execution probability of the second application corresponding to the first application 301 may indicate a correlation between the first application 301 and the second application. If the execution probability of a specific application is high, the importance of the specific application may be relatively high. For example, when the first application 301 is executed, an application having a high importance may be executed.

In operation 507, the processor 120 may identify the second application 302 having a relatively high execution probability based on the identified execution probability. For example, the processor 120 may identify the second application 302 having the highest execution probability, or a number n of second applications 302 having the n highest execution probabilities. For example, the processor 120 may identify a number n of second applications 302 having execution probabilities exceeding a predetermined threshold. According to an embodiment, the processor 120 may execute the identified second application 302 (or plurality of second applications 302). According to an embodiment, the processor 120 may execute the second application 302 having an associative relationship with the first application 301 in response to the execution of the first application 301.

In operation 509, the processor 120 may store chain information (e.g., the chain information 432 of FIG. 4) indicating an associative relationship between the first application 301 and the second application 302 in the memory 130. The processor 120 may also store chain information (e.g., the chain information 432 of FIG. 4) indicating an associative relationship between the first application 301 and applications related to the component type of the first application 301, for example applications that are executed within a predetermined time of the execution of the component type of the first application 301.

Table 1 below illustrates an example of the chain information 432.

**[Table 1]**

| callee: second application 302 | caller: first application 301 | component | chain code |
|---|---|---|---|
| com.android.app.aodservice | com.android.calendar | provider | 13137ce |
| com.android.providers.settings | com.android.app.aodservice | provider | 92bbb7 |
| com.android.app.reminder | com.android.calendar | provider | 13137ce |
| com.android.providers.settings | com.android.app.reminder | provider | 7243566 |
| com.android.scs | com.android.calendar | provider | 13137ce |
| com.android.providers.settings | com.android.scs | provider | 26ef899 |

For example, the first application 301 may include a calendar-related application and may be executed based on a widget interface. In response to the execution of the first application 301 (e.g., com.android.calendar), the processor 120 may identify a component (e.g., "provider", the "provider" 313 of FIG. 3) related to the execution of the first application 301. The processor 120 may identify a first chain code (e.g., 13137ce) corresponding to a component (e.g., "provider") of the first application 301. Referring to Table 1, the electronic device 101 may call at least one second application 302 (e.g., "aodservice", "reminder", and/or "scs") in response to the first chain code being "1313137ce". Referring to Table 1, the processor 120 may identify the 2-1 chain code (e.g., 92bbb7) corresponding to the component (e.g., "provider") of the 2-1 application ("aodservice") in response to the execution of the 2-1 application ("aodservice"), identify the 2-2 chain code (e.g., 7243566) corresponding to the component (e.g., "provider") of the 2-2 application ("reminder") in response to the execution of the 2-2 application ("reminder"), and identify the 2-3 chain code (e.g., 26ef899) corresponding to the component (e.g., "provider") of the 2-3 application ("scs") in response to the execution of the 2-3 application ("scs").

According to an embodiment, the electronic device 101 may generate chain information 432 including a chain code indicating an associative relationship between the first application 301 and the second application 302, and store the chain information 432 in the memory 130.

According to an embodiment, the processor 120 may identify the second application 302 corresponding to the component of the first application 301 based on the chain information 432 stored in the memory 130 in response to the execution of the first application 301, and automatically execute the identified second application 302.

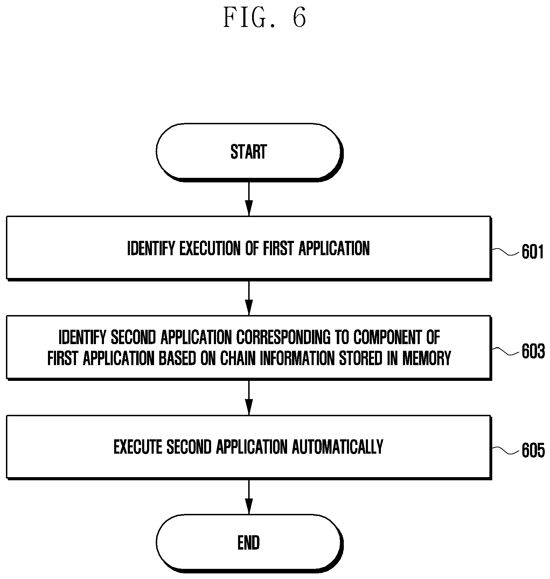

FIG. 6 is a flowchart illustrating a method of executing an application based on chain information according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 601 to 605 may be understood as being performed by a processor (e.g., the processor 120 of FIGS. 1 and 4) of an electronic device (e.g., the electronic device 101 of FIGS. 1 and 4). The electronic device 101 of FIG. 6 may be at least partially similar to the electronic device 101 of FIGS. 1 and 4, or may further include other embodiments of the electronic device 101.

According to an embodiment, the electronic device 101 may be in a state in which chain information (e.g., the chain information 432 of FIG. 4) indicating an associative relationship between a first application (e.g., the first application 301 of FIG. 3) and a second application (e.g., the second application 302 of FIG. 3) is stored in a memory (e.g., the memory 130 of FIG. 4).

Referring to FIG. 6, in operation 601, the processor 120 of the electronic device 101 may identify execution of the first application 301. For example, the processor 120 may identify a component (e.g., the component 310 of FIG. 3) indicating an operation according to the execution of the first application 301. The component may be stored as component-related information 431 of the memory 130.

In operation 603, the processor 120 may identify the second application 302 corresponding to the component of the first application 301 based on the chain information 432 stored in the memory 130 in response to the execution of the first application 301. For example, the processor 120 may identify at least one second application corresponding to the component of the first application 301 and identify the importance (e.g., the importance information 433 of FIG. 3) of the identified at least one second application. The processor 120 may select a second application 302 having a relatively high importance from among the at least one identified second application.

In operation 605, the processor 120 may automatically execute the second application 302 (e.g., the second application 302 identified to be of relatively high importance). The processor 120 may select the second application 302 corresponding to the component of the first application 301 based on the chain information 432, and automatically execute the selected second application 302. For example, the second application 302 may include a relatively important application in maintaining the execution state of the first application 301.

According to an embodiment, the processor 120 may perform at least some preparation operations (e.g., a preloading operation) performed before the second application 302 is executed in advance. For example, the processor 120 may at least partially perform a preloading operation (e.g., a preparation operation) corresponding to the second application 302. For example, when the second application 302 is selected, the processor 120 may at least partially perform a preloading operation (e.g., a preparation operation) corresponding to the second application 302 instead of immediately executing the second application 302. When the preloading operation of the second application 302 is performed, the time required for the execution of the second application 302 may be reduced. According to an embodiment, the processing speed of the electronic device 101 may be improved by performing the preloading operation of the second application 302. Utilization of the electronic device 101 may be improved.

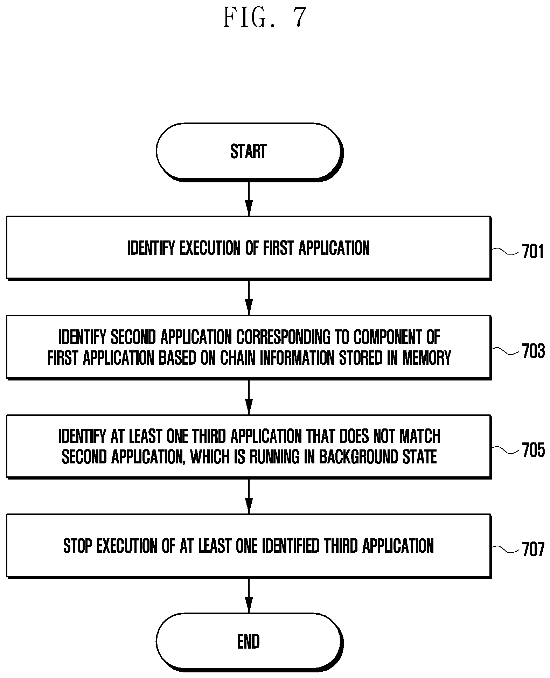

FIG. 7 is a flowchart illustrating a method of controlling an application based on chain information according to an embodiment of the disclosure.

In the following embodiments, each operation may be performed sequentially, but is not necessarily performed sequentially. For example, the order of each operation may be changed, and at least two operations may be performed in parallel.

According to an embodiment, operations 701 to 707 may be understood as being performed by a processor (e.g., the processor 120 of FIGS. 1 and 4) of an electronic device (e.g., the electronic device 101 of FIGS. 1 and 4). The electronic device 101 of FIG. 7 may be at least partially similar to the electronic device 101 of FIGS. 1 and 4, or may further include other embodiments of the electronic device 101.

According to an embodiment, the electronic device 101 may be in a state in which chain information (e.g., the chain information 432 of FIG. 4) indicating an associative relationship between a first application (e.g., the first application 301 of FIG. 3) and a second application (e.g., the second application 302 of FIG. 3) is stored in a memory (e.g., the memory 130 of FIG. 4).

Referring to FIG. 7, in operation 701, the processor 120 of the electronic device 101 may identify execution of the first application 301. For example, the processor 120 may identify a component (e.g., the component 310 of FIG. 3) indicating an operation according to the execution of the first application 301. The component may be stored as component-related information 431 of the memory 130.

In operation 703, the processor 120 may identify the second application 302 corresponding to the component of the first application 301 based on the chain information 432 stored in the memory 130 in response to the execution of the first application 301. For example, the processor 120 may identify at least one second application corresponding to the component type of the first application 301 and identify the importance (e.g., the importance information 433 of FIG. 3) of the identified at least one second application. The processor 120 may select a second application 302 having a relatively high importance from among the at least one identified second application. The processor 120 may automatically execute the selected second application 302 (e.g., the second application 302 identified to be of relatively high importance). The processor 120 may select the second application 302 corresponding to the component of the first application 301 based on the chain information 432, and automatically execute the selected second application 302. For example, the second application 302 may include a relatively important application in maintaining the execution state of the first application 301. According to an embodiment, the processor 120 may perform at least some preparation operations (e.g., a preloading operation) performed before the second application 302 is executed in advance. For example, the processor 120 may at least partially perform a preloading operation (e.g., a preparation operation) corresponding to the second application 302. For example, when the second application 302 is selected, the processor 120 may at least partially perform a preloading operation (e.g., a preparation operation) corresponding to the second application 302 instead of immediately executing the second application 302.

**In** operation 705, the processor 120 may identify at least one third application that does not match the second application 302, which is running in a background state. For example, the electronic device 101 may be in a state where a plurality of applications are running in the background state. The processor 120 may select a third application that does not match the identified second application 302 from among the plurality of applications. For example, at least one third application may include an application with relatively low relevance (e.g., a relatively low importance or a relatively low priority) in a situation where the first application 301 is running. Additionally, or alternatively, the at least one third application may include an application for which no chain information 432 exists between the third application and the first application 301 (or component type of the first application 301).

**In** operation 707, the processor 120 may stop (e.g., a kill operation) execution of the at least one identified third application. For example, in order to improve the performance of the electronic device 101, the processor 120 may stop (e.g., a kill operation) the execution of a relatively low-importance third application from among applications running in a background.

According to an embodiment, while a plurality of applications are running together, the electronic device 101 may preferentially stop (e.g., a kill operation) an application running in the background considering a situation where the memory 130 is insufficient. For example, the electronic device 101 may select a third application with a relatively low importance (e.g., priority) from among a plurality of applications running in the background, and stop (e.g., a kill operation) the execution of the selected third application. According to an embodiment, when the first application 301 is being executed, the electronic device 101 may select a third application having a relatively low correlation with the first application 301, and stop (e.g., a kill operation) the execution of the selected third application. According to an embodiment, the performance of the electronic device 101 may be improved by stopping (e.g., a kill operation) the execution of the third application unnecessarily executed in the background. According to an embodiment, as the execution of the third application is stopped (e.g., a kill operation), the capacity of the memory 130 occupied by the third application may be reduced, and thus the utilization of the memory 130 may be improved. In addition, the use of a battery (e.g., the battery 189 of FIG. 1) due to the execution of the third application may be reduced, and the efficiency of the battery 189 may be improved.

A method of executing an application performed by an electronic device according to an embodiment may include identifying the execution of a second application 302 corresponding to a component 310 of a first application 301 in response to the execution of the first application 301 from among a plurality of applications stored in a memory 130, storing chain information 432 indicating an associative relationship between the first application 301 and the second application 302 in the memory 130, and executing the second application 302 corresponding to the component 310 of the first application 301 based on the chain information 432 stored in the memory 130 in response to the execution of the first application 301 in a state in which chain information 432 between the plurality of applications is stored in the memory 130.

A method according to an embodiment may further include identifying execution probability of at least one application corresponding to the component 310 of the first application 301 in response to the execution of the first application 301, determining the second application 302 with a relatively high execution probability based on the identified execution probability, and generating chain information 432 in which an associative relationship between the first application 301 and the second application 302 is configured.

A method according to an embodiment may further include displaying execution screen of the first application 301 through a display 160 in response to the execution of the first application 301, and executing the second application 302 in a background state.

A method according to an embodiment may further include identifying a request to stop execution of a third application running in a background state while the execution screen of the first application 301 is being displayed through the display 160, and maintaining execution of the third application when an associative relationship between the third application and the first application 301 is identified based on the chain information 432 stored in the memory 130.

A method according to an embodiment may further include identifying the priority corresponding to each application when there are multiple identified second applications 302, selecting at least one second application 302 to be executed based on the identified priority, and executing the selected at least one second application 302.

According to an embodiment, the priority may be determined based on the importance corresponding to the at least one second application 302 in order to maintain execution of the first application 301.

A method according to an embodiment may further include identifying at least one third application being executed in a background, and stopping execution of the at least one third application when the identified at least one third application is not included in the at least one second application.

According to an embodiment, the component 310 may include at least one of a first type of component in which an execution screen of the first application 301 is displayed, a second type of component in which the first application 301 is executed in a background state, a third type of component in which account information connected through the first application 301 is shared, and a fourth type of component in which at least one component included in the electronic device 101 is controlled based on the first application 301.

A method according to an embodiment may further include identifying at least one preparation operation performed before execution of the identified second application 302, and performing at least some of the preparation operations corresponding to the second application 302 in response to the execution of the first application 301.

A method according to an embodiment may further include identifying a situation where the second application 302 is executed in response to the execution of the first application 301, identifying additional chain information indicating an associative relationship between the first application 301 and the second application 302, and updating chain information 432 stored in the memory 130 based on the identified additional chain information.

According to an embodiment, a non-transitory computer-readable storage medium (or a computer program product) storing one or more programs for performing an application execution method of an electronic device 101 may be described. According to an embodiment, the one or more programs, when executed by the processor 120 of the electronic device 101, may include instructions for performing identifying the execution of a second application 302 corresponding to a component 310 of the first application 301 in response to the execution of the first application 301 from among a plurality of applications stored in a memory 130, storing chain information 432 indicating an associative relationship between the first application 301 and the second application 302 in the memory, executing the second application 302 corresponding to the component 310 of the first application 301 based on the chain information 432 stored in the memory 130 in response to the execution of the first application 301 in a state in which chain information 432 between the plurality of applications is stored in the memory 130, and automatically executing the identified second application 302.

According to an embodiment, the one or more programs, when executed by the processor 120 of the electronic device 101, may include instructions for performing identifying the execution probability of at least one application corresponding to the component 310 of the first application 301 in response to the execution of the first application 301, determining the second application 302 with a relatively high execution probability based on the identified execution probability, and generating chain information 432 in which an associative relationship between the first application 301 and the second application 302 is configured.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. It is intended that features described with respect to separate embodiments, or features recited in separate claims, may be combined unless such a combination is explicitly specified as being excluded or such features are incompatible. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a memory (130) configured to store instructions; and
a processor (120),
wherein the instructions are configured to, when executed by the processor (120), cause the electronic device (101) to:
in response to execution of a first application (301) from among a plurality of applications stored in the memory (130), identify execution of a second application (302) corresponding to a component (310) of the first application (301);
store, in the memory (130), chain information (432) indicating an associative relationship between the first application (301) and the second application (302); and
in a state in which chain information (432) between the plurality of applications is stored in the memory (130), in response to the execution of the first application (301), based on the chain information (432) stored in the memory (130), execute the second application (302) corresponding to the component (310) of the first application (301).

2. The electronic device of claim 1,
wherein the instructions are configured to, when executed by the processor (120), cause the electronic device (101) to:
in response to execution of the first application (301), identify an execution probability of at least one application corresponding to the component (310) of the first application (301);
based on the identified execution probability, determine the second application (302) with a relatively high execution probability; and
generate chain information (432) in which an associative relationship between the first application (301) and the second application (302) is configured.

3. The electronic device of claim 1, further comprising a display (160),
wherein the instructions are configured to, when executed by the processor (120), cause the electronic device (101) to:
in response to the execution of the first application (301), display an execution screen of the first application (301) through the display (160); and
execute the second application (302) in a background state.

4. The electronic device of claim 3,
wherein the instructions are configured to, when executed by the processor (120), cause the electronic device (101) to:
identify a request to stop execution of a third application being executed in a background state while the execution screen of the first application (301) is being displayed through the display (160); and
based on the chain information (432) stored in the memory (130), in case that an associative relationship between the third application and the first application (301) is identified, maintain execution of the third application.

5. The electronic device of claim 1,
wherein the instructions are configured to, when executed by the processor (120), cause the electronic device (101) to:
in case that there are multiple identified second applications (302), identify the priority corresponding to each application;
based on the identified priority, select at least one second application (302) to be executed; and
execute the selected at least one second application (302),
wherein the priority is determined based on importance corresponding to the at least one second application (302) in order to maintain execution of the first application (301).

6. The method of claim 5,
wherein the instructions are configured to, when executed by the processor (120), cause the electronic device (101) to:
select at least one second application (302) from among the plurality of identified applications based on a priority of each of the plurality of identified applications comprises at least one of:
selecting the identified application with the highest priority value,
selecting n identified applications with the n highest priority values, and
selecting at least one identified application with a priority exceeding a predetermined threshold value.

7. The electronic device of claim 5,
wherein the instructions are configured to, when executed by the processor (120), cause the electronic device (101) to:
identify at least one third application being executed in a background; and
in case that the identified at least one third application is not included in the at least one second application, stop execution of the at least one third application.

8. The method of claim 7,
wherein the identified third application is at least one of:
an application not matching the second application (302),
an application determined to have a low priority,
an application for which no chain information exists between the application and the first application (301), and
an application for which no chain information corresponding to the component type exists between the application and the first application (301).

9. The electronic device of claim 1,
wherein the component (310) comprises at least one of a first type of component in which an execution screen of the first application (301) is displayed, a second type of component in which the first application (301) is executed in a background state, a third type of component in which account information connected through the first application (301) is shared, and a fourth type of component in which at least one component included in the electronic device (101) is controlled based on the first application (301).

10. The electronic device of claim 1,
wherein the instructions are configured to, when executed by the processor (120), cause the electronic device (101) to:
identify at least one preparation operation performed before execution of the identified second application (302); and
in response to execution of the first application (301), perform at least some of the preparation operations corresponding to the second application (302).

11. The electronic device of claim 1,
wherein the instructions are configured to, when executed by the processor (120), cause the electronic device (101) to:
in response to execution of the first application (301), identify a situation where the second application (302) is executed;
identify additional chain information indicating an associative relationship between the first application (301) and the second application (302); and
based on the identified additional chain information, update chain information (432) stored in the memory (130).

12. The electronic device of claim 1,
wherein the instructions are configured to, when executed by the processor (120), cause the electronic device (101) to:
identify execution of a second application (302) within a predetermined time period of execution of the component (310) of the first application.

13. The electronic device of claim 1,
wherein the instructions are configured to, when executed by the processor (120), cause the electronic device (101) to:
when an execution request of the component (310) of the first application (301) is detected, identify a top-component corresponding to a top-application currently running in a foreground;
identify the presence or absence of correlating chain information (432) between the identified top-component and the first type of component;
in the case that the correlating chain information (432) exists, execute the component (310); and
in the case that the correlating chain information (432) does not exist, delay execution of the component (310) until processing of the top-application is completed.

14. A method of executing an application performed by an electronic device, the method comprising:
in response to execution of the first application (301) from among a plurality of applications stored in a memory (130), identifying execution of a second application (302) corresponding to a component (310) of a first application (301);
storing chain information (432) indicating an associative relationship between the first application (301) and the second application (302) in the memory (130); and
in a state in which chain information (432) between the plurality of applications is stored in the memory (130), in response to the execution of the first application (301), executing the second application (302) corresponding to the component (310) of the first application (301) based on the chain information (432) stored in the memory (130).

15. A non-transitory computer-readable storage medium storing one or more programs for performing an application execution method of an electronic device (101),
wherein the one or more programs comprise instructions configured to, when executed by the processor (120) of the electronic device (101), perform:
in response to execution of the first application (301) from among a plurality of applications stored in a memory (130), identifying the execution of a second application (302) corresponding to a component (310) of the first application (301);
storing chain information (432) indicating an associative relationship between the first application (301) and the second application (302) in the memory; and
in a state in which chain information (432) between the plurality of applications is stored in the memory (130), in response to execution of the first application (301), executing the second application (302) corresponding to the component (310) of the first application (301) based on the chain information (432) stored in the memory (130).
